# EUROPÄISCHE PATENTSCHRIFT

(11) **EP 1 379 143 B1**
(45) Veröffentlichungstag und Bekanntmachung des Hinweises auf die Patenterteilung: **28.12.2005**
(21) Anmeldenummer: 02726231.0
(22) Anmeldetag: 28.03.2002
(51) Int. Cl.: A22C 25/17

(54) **VERFAHREN UND VORRICHTUNG ZUM BEARBEITEN VON FISCHFILETS (GESTRECKTE FILETAUSGABE)**
METHOD AND DEVICE FOR PROCESSING FILLETS OF FISH (CONVEYOR BELT FILLET PRODUCTION)
PROCEDE ET DISPOSITIF POUR LEVER DES FILETS DE POISSON (SORTIE DES FILETS SUR BANDE)

(30) Priorität: 31.03.2001 DE 10117304
(43) Veröffentlichungstag der Anmeldung: 14.01.2004
(73) Patentinhaber: NORDISCHER MASCHINENBAU RUD. BAADER GMBH + CO KG, 23560 Lübeck (DE)
(72) Erfinder: GROSSEHOLZ, Werner, 23628 Krummesse (DE); SCHWARZ, Olaf, 23966 Wismar (DE)
(74) Vertreter: Wenzel & Kalkoff
(86) Internationale Anmeldenummer: PCT/EP2002/003523
(87) Internationale Veröffentlichungsnummer: WO 2002/078453

(56) Entgegenhaltungen:
- DE-A- 3 700 324
- DE-B- 2 642 507
- US-A- 5 779 531

## Beschreibung

Die Erfindung betrifft ein Verfahren zum Bearbeiten von Fischfilets, die mindestens eine Hautschicht (Abfallschicht) und eine Filetfleischschicht (Nutzschicht) sowie beide verbindende Sehnen- und Fettbereiche umfassen und durch ein dünneres Schwanzende sowie ein jenem entgegengesetztes stärkeres Kopfende definiert sind, durch Befreien der Filetfleischschicht von den Haut-, Fett- und Sehnen-Bestandteilen, wobei die Fischfilets auf der Hautseite liegend einem kurzzeitigen, hin- und hergehend quer zur Förderrichtung verlaufenden ziehenden Schnitt im Schwanzbereich und anschließend einem diesen Schnitt fortführenden spaltenden Trennen einer feststehenden Trennkante unterworfen werden, die bei Auflaufen des Filets im Bereich des ziehenden Schnitts zwischen Haut- und Fleischschicht eindringt und beide Schichten voneinander trennt, während gleichzeitig Zug auf die Hautschicht ausgeübt wird. Weiterhin betrifft die Erfindung eine Vorrichtung zur Durchführung eines solchen Bearbeitungsverfahrens, umfassend eine während der Bearbeitung im wesentlichen die Förderung der Filets übernehmende Enthäutewalze; ein feststehendes Trennwerkzeug in Form eines mit einer Andrückfläche dem Umfang der Enthäutewalze gegenüberliegenden Andrückschuh, der mit einer Trennkante zum spaltenden Trennen von Nutz- und Abfallschicht ausgebildet sowie in seinem Abstand gegenüber der Enthäutewalze federnd veränderbar gelagert ist, und eine mit ihrer Schneide relativ zur Trennkante vor- und zurückbewegbare Schneidklinge.

Grundsätzlich differenziert man bei der allgemein auch als Enthäuten bezeichneten Entfernung von Oberflächenschichten von Fischfilets zwischen zwei von ihrer Funktion her unterschiedlichen Enthäutemethoden. Diese sind einerseits die sogenannte Standardenthäutung sowie andererseits das Tiefenenthäuten. Beim Standardenthäuten wird die Haut durch Relativbewegung zwischen dem Filet einerseits und einer stumpfen oder scharfen Kante andererseits im wesentlichen durch einen dem Spalten vergleichbaren Vorgang im Bereich der zwischen Lederhaut und Muskelfleisch angeordneten Fettschicht abgezogen. Es verbleibt der sogenannte Silberspiegel auf dem Filetfleisch. Dieser Silberspiegel ist in vielen Kulturbereichen ein Kriterium für die Qualität des verzehrfertigen Fischfilets. Beim Tiefenenthäuten hingegen, bei dem die zu entfernende Schicht hinsichtlich ihrer Stärke eingestellt wird, soll z.B. der Silberspiegel dann, wenn er unerwünscht ist, mit entfernt werden, und es können Randbereiche des Muskelfleisches ebenfalls beseitigt werden. Es wird dabei mit einer stehenden oder oszillierenden scharfen Klinge eine dünne, die Haut, Sehnen und Fett enthaltende Scheibe des Fleisches abgeschnitten, die u.a. auch den Silberspiegel enthält.

Für das reine Standardenthäuten sind Vorrichtungen bekannt, die mit einem als stumpf zu bezeichnenden Messer arbeiten, das, wie z.B. in DE-PS 680 720 gezeigt, oszillierend angetrieben sein kann. Bei solchen Systemen wird das Messer aus einer abgerückten Grundstellung nach Vorbeigang des Filetzipfels und Einlaufen desselben in einen eine Schaltkraft auslösenden Einzugsspalt in die Arbeitsstellung geschaltet, in der es von oben her durch das Filetfleisch bis auf die Haut des Zipfels dringt und dann durch die Zugausübung auf die Haut das Filet einschließlich des Silberspiegels von der darunter liegenden Abfallschicht abspaltet. Am Filetzipfel entsteht ein Abschlag, der zu Ausbeuteverlusten wertvollen Filetfleisches führt.

Weiter ist aus der Druckschrift DE 21 18 164 eine Vorrichtung mit einem durch Einlauf des Filets in den Spalt zwischen einer Enthäutewalze und einem Andrückschuh in Arbeitsstellung bringbaren oszillierenden Enthäutemesser mit reduziertem Schaltweg bekannt. Damit ist angestrebt, den erwähnten Abschlag zu verringern.

Dem gleichen Zweck dient eine nach dem eingangs beschriebenen Verfahren arbeitende und mit den dort aufgeführten Merkmalen ausgestattete, aus DE 41 36 459 C1 bekannte Vorrichtung. Nach erfolgtem Anschnitt des Filetendes durch die Schneidklinge wird bei Eintreten des Hautzipfels in den Spalt zwischen Mitnehmerwalze und Andrückschuh ein Moment erzeugt, das den schwenkbar gelagerten Andrückschuh entgegen dem Uhrzeigersinn gegen Federkraft bis zu einem Anschlag bewegt. Gleichzeitig wird die Schneidklinge relativ zur feststehenden Trennkante des Andrückschuhs zurückbewegt und gibt diese frei, um nunmehr das spaltende Trennen zwischen Haut und Filet durchzuführen. Da sich die Klinge, wenn kein Hautzipfel im Spalt zwischen Andrückwalze und Andrückschuh vorhanden ist, immer in vorderster Stellung oszillierend vor der Trennkante befindet und schneidet, bevor das Hautende im Spalt gegriffen wird, ist es möglich, daß das Schwanzende über das Messer läuft und nicht darunter gelangt, also kein ordnungsgemäßer Anschnitt erfolgt. Wenn das Erfassen und Schneiden noch zu einem späteren Zeitpunkt geschieht, bleiben Hautinseln am Filet. Nach dem Bearbeiten muß die ausgeklappte Klinge zusammen mit dem Andrückschuh erst wieder in die Ausgangslage für den Anschnitt zurückgeklappt werden, womit unnötige Zeit bis zum nächsten Bearbeitungsvorgang verloren geht. Ein Anordnen von Andrückmitteln wie einer Rolle über der Schneidklinge im Einlaufbereich, also über der Anschnittklinge, wie z.B. aus DE 26 53 946 bekannt, ist wegen der permanenten Hin- und Herbewegung, der Klinge und der Gefahr, daß diese beim automatischen Zurückschalten der Klinge bei Wegfall des Schaltmoments nach Ablauf der Haut aus dem Spalt mit einer solchen Andrückrolle in Berührung geriete, nicht möglich.

Sodann sind z.B. durch DE 37 00 324 C2 Vorrichtungen bekannt, die schon in Richtung des Tiefenenthäutens zielen und anstelle eines als stumpf bezeichneten Messers eine scharfe, permanent oszillierende Klinge auf einem Andrückschuh tragen. Dabei wird allerdings die Tiefe des Eindringens der Klinge durch einstellbare Anschläge festgelegt, so daß es bei dünneren Hautbereichen zum Abtrennen des Silberspiegels kommt.

Als typisch für das Tiefenenthäuten kennt man u.a. eine Enthäutemaschine mit einer ebenfalls permanent bewegten Klinge, wie sie aus DE 1 810 673 B1 oder US-A-5 779 531 hervorgeht. Hierbei wird während des gesamten Enthäutevorgangs durch eine von oben wirksame Andrückwalze der erforderliche Druck ausgeübt, um eine Schicht gleichbleibender Stärke abzutrennen.

Angesichts der beim Tiefenenthäuten aufgrund der abgetragenen Schicht im wesentlichen gleichmäßiger Stärke entstehenden Fischfleischverluste wird in vielen Bereichen speziell mit Blick auf eine höhere Filetfleischausbeute das Standardhäuten dem Tiefenenthäuten vorgezogen. Allerdings erhält man dabei an der Ausgabe die enthäuteten Filets nur in "loser Schüttung", d.h. völlig ungeordnet; teilweise übereinander liegend, teilweise gefaltet und gewellt, wofür verschiedene Fakten verantwortlich sind: Der Schwanzbereich von Filets ist in der Regel sehr stark von Sehnen durchzogen, die zwischen den das Fleisch bestimmenden Muskelschichten und der Haut auf letzterer angewachsen sind. Beim Standardenthäuten mit stumpfem oder scharfem Enthäutemesser werden diese Sehnen zwischen Haut und Fleisch nicht sicher durchtrennt. Vielmehr bleiben sie am Messer hängen und führen zu seitlichen, das Filet aus seiner Bahn reißenden Kräften. Dieser Vorgang wird im Fachjargon oftmals als Verreißen bezeichnet. Weiterhin setzt sich die genannte Versehnung am Filet in dessen Randbereichen, also den Bereichen des Rückens und des Bauches, fort, und zwar mit ähnlichen, den vorgenannten entsprechenden Folgen, indem durch nicht durchtrennte Sehnen an den Rändern ein Verreißen des Filets erfolgt. Endlich entstehen in diesen Bereichen infolge von Flossen- oder Grätenresten im Filet häufig erhöhte Trennwiderstände, die das Endprodukt ebenfalls aus seiner geordneten Lage herausbewegen. Zwar kann man beim Standardenthäuten mit einer scharfen Klinge diese Faktoren geringfügig reduzieren, jedoch bilden sich in der Folge verstärkt Hautinseln auf dem Filet, was einen noch unerwünschteren Effekt mit dem Erfordernis eines vermehrten Nachtrimmens nach sich zieht.

Der Erfindung liegt demgegenüber die Hauptaufgabe zugrunde, trimmfreie, d.h. nicht nachzubearbeitende Fischfilets aus mit Sehnen zwischen Fleisch- und Hautschicht versehener Filetrohware zu erzeugen.

Ein wesentliches weiteres Ziel der Erfindung ist es, das durch das Filetieren offenliegende empfindliche Fleisch möglichst schonend ohne Qualitätseinbuße zu enthäuten sowie in gestreckter Ausrichtung auf einen nachgeschalteten Förder-, Sortier- und/oder Trimmtisch zu übergeben, um Zeitaufwand für die die letzte Kontrolle bezüglich Sauberkeit/Qualität der Filets durchführenden Personen zu ersparen, wie er durch Auseinanderklappen und Ausrichten der Filets bisher entsteht.

Zur Lösung der Aufgabe ist bei dem eingangs beschriebenen Verfahren vorgesehen, daß auf die Fleischseite des Filets im Einlaufbereich desselben gegen die Trennkante Druck ausgeübt und der ziehende Schnitt durch ein Signal gesteuert ausgelöst wird, in wenigen Hüben erfolgt sowie unmittelbar danach Signal-gesteuert wieder unterbrochen wird, woraufhin die Trennkante zum Fortsetzen des endgültigen Trennvorgangs in den Bereich des ziehenden Schnitts zwischen Abfall- und Nutzschicht eintritt.

Bei der eingangs beschriebenen Vorrichtung wird die Aufgabe dadurch gelöst, daß oberhalb der Trennkante eine Andrückwalze angeordnet ist, die um eine vorrichtungsfeste Achse schwenkbar gelagert ist; und daß die Andrückwalze mit einem Näherungsschalter wirkverbunden ist, der Signale für die Bewegung der Schneidklinge erzeugt und über diese einen Bewegungsmechanismus für die Klinge steuert.

In bevorzugter Weiterbildung des Verfahrens kann der kurzzeitige ziehende Schnitt erst nach Eintritt des dünneren Schwanzendes des Filets in einem den Zug auf die Hautschicht auslösenden Spalt und nach spaltendem Anschnitt durch die feststehende Trennkante unter Fortsetzung dieses Anschnitts erfolgen. Auch kann vorzugsweise der kurzzeitige ziehende Schnitt einen bis drei Hübe umfassen, ohne daß hierin eine Ausschließlichkeit oder Beschränkung in bezug auf die Anzahl der Hübe gesehen werden darf; ferner kann die Signalsteuerung des ziehenden Schnitts durch ein von der Druckausübung im Einlaufbereich des Filets gegen die Trennkante abgeleitetes Signal, also durch die Druckänderung infolge Dickenzunahme des Filets vom Schwanz- zum Kopfende hin, ausgelöst werden.

Mit Hilfe dieser verfahrens- und vorrichtungstechnischen Maßnahmen ist es möglich, daß ohne merklichen Anschnittverlust sofort dann, wenn das Schwanzende des auflaufenden Filets unter die dicht über der Schneidkante des Enthäutemessers positionierte Andrückrolle gelangt, das Filetende nicht nur in den einstellbaren Spalt zwischen der Mantelfläche der Enthäutewalze und dem Andrückschuh eingeführt, sondern gleichzeitig infolge Auslenkens der Andrückrolle über ein dadurch erzeugtes Signal die Tätigkeit der Schneidklinge ausgelöst wird, die mindestens einen oder mehrere, hinsichtlich ihrer Anzahl je nach Konsistenz des zu verarbeitenden Fleisches oder nach Fischspezies einstellbare Hübe ausführt und durch ziehenden Schnitt in dem kritischen Anfangsbereich sicher die Sehnen zwischen Fleisch und Haut durchtrennt, so daß anschließend das Trennwerkzeug selbst in Fortsetzung dieses Anschnittes eine saubere Trennung der Nutzschicht, also des Filetfleisches, von der Abfallschicht, also Haut, Sehnen und Grätenresten, vollziehen kann. Der normale Arbeitsablauf ist dabei so, daß zunächst durch die Trennkante des Andrückschuhs ein kurzes Stück Nutzschicht von der Haut abgespalten wird, wobei die Andrückrolle durch das Filet angehoben wird und das Steuersignal für die wenigen Hübe des ziehenden Schnittes auslöst. Wenn man die Andrückrolle aber etwas mehr in Richtung auf das ankommende Filet vorverlegt, ist es auch möglich und leicht vorstellbar, daß der erste Schnitt des kurzen Standard-Spaltens wegfallen und der Anschnitt unmittelbar mit Hilfe der aus ihrer normalen Ruheposition hinter der stillstehenden Andrückschuh-Trennkante vorgeschobenen und dabei nur für wenige Hübe in ziehende Schnittbewegung versetzten Klinge erfolgen kann. Diese wenigen Hübe trennen in der Regel 3 bis 5 cm der Nutzschicht des Schwanzbereiches ab.

Vorteilhaft sind Dauer und Zahl der Hübe des ziehenden Anschnitts einstellbar, wobei, je nach gewählter Konstruktion für die Andrückrollenbelastung, die Druckausübung auf das Filet im Trennwerkzeugbereich nach dem ggf. den Anschnitt bildenden ziehenden Schnitt beendet werden und die Klinge mit Erreichen der eingestellten Hubzahl in ihre - zurückgezogene - Ausgangslage zurückkehren kann. Vorrichtungstechnisch ist es besonders zweckmäßig, wenn die Schneidklinge mit ihrer Schneide parallel zur Trennkante des Andrückschuhs liegt und mittels schräg zu dieser Kante angeordneter oder bogenförmig verlaufender Führungen zwischen ihren beiden Extrempositionen geführt bewegt werden kann. Damit kann man den Bewegungsantrieb für die Schneidklinge außerhalb des Funktionsraumes anordnen und zugleich die Voraussetzung für ein Nachrüsten vorhandener Einrichtungen ohne diese Schneid- oder Anschnittmöglichkeit schaffen. Infolge der Schräganordnung der Führungen für die Schneidklinge relativ zur Vorderkante des Andrückschuhs bzw. der Transportrichtung des Filets wird - im Verhältnis zu dem eigentlichen Enthäutemesser - die Wirkung des ziehenden Schnittes verstärkt bzw. in besonders einfacher und sinnvoller Weise herbeigeführt.

Aus Gründen der Funktions- und Unfallsicherheit kann vorteilhaft der Andrückschuh über sowie hinter seiner Schneide mit einer Messeraufnahmetasche versehen sein, die die Schneidklinge relativ zur Trennkante in der Ruheposition abgedeckt aufnimmt und - beim Ausfahren in die Arbeitsposition - freigibt.

Um ein frühzeitiges Ergreifen der Schneidklinge zu ermöglichen, d.h. um, wie weiter oben angedeutet, bereits vor einem ersten Angriff der Trennkante einen Anschnitt mittels der Klinge zu ermöglichen, kann vorzugsweise die Andrückwalze mit ihrem Auflagewirkbereich gegenüber dem Filet oberhalb der Trennkante zu dieser, in Richtung des ankommenden Filets gesehen, beabstandet angeordnet, also vorgeschoben sein.

Als zweckmäßiges mechanisches Bauelement für die Durchführung des ziehenden Schnittes hat sich die Verwendung eines Druckmittelzylinders herausgestellt, der über ein Gestänge an der Klinge angreift, diese in der Richtung der Enthäutewalzenachse, d.h. im wesentlichen parallel dazu, bewegt und mit dem Näherungsschalter in funktioneller Verbindung steht. Bei Einschwenken der Andrückrolle in ihre Ausgangslage wird die Tätigkeit des Zylinders sofort unterbunden. Die vorzugsweise auf Stiften in der Tasche im Andrückschuh geführte Klinge kann dabei in bezug auf die Stellungen des Zylinderkolbens so angeordnet sein, daß sie in der Ausgangslage des Zylinders gerade völlig in der Tasche, das heißt hinter der Trennkante zurückgezogen liegt, also die Andrückschuhabdeckung in dieser Position die Klinge völlig von ihrer Schneidfunktion entbunden aufnimmt, wohingegen sich bei ausgefahrenem Zylinderkolben die Klinge am weitesten aus der Tasche auf das Filet zu entfernt hat. Andererseits ist bei bogen-oder sichelförmiger Ausbildung der Führungen die Klinge zu Beginn des Hubes eingefahren, dann - etwa bei halbem Hub - ausgefahren, um sich auf dem Schlußteil des Hubes wieder in die eingefahrene Position zurückzubewegen. Dieser Bewegungsablauf wiederholt sich beim Rückhub entsprechend (umgekehrt).

Um über den gesamten Zeitraum der Bearbeitung des Filets durch das Enthäütemesser selbst ein Verreißen des Filets beispielsweise durch in den seitlichen Rücken- und/oder Bauchbereichen vorhandene Sehnen-, Gräten- oder sonstige Abfallbereiche ausgelöst, zu verhindern, ist zweckmäßig vorgesehen, daß das separierte Filet ablaufseitig hinter dem Trennwerkzeug durch Zugausübung von unten und oben über seine im wesentlichen gesamte Quererstreckung gestreckt transportiert wird. Zu diesem Zweck kann im Bereich hinter der Trennkante des Andrückschuhs eine Filetausbreitwalze über der Ablauffläche des Filets angeordnet sein. Um dabei den Ausbreiteffekt noch zu erhöhen, kann die Filetausbreitwalze über einem Ablaufförderband für das Filet mit diesem in Richtung und Geschwindigkeit gleichlaufend angeordnet sein, wobei diese Geschwindigkeit geringfügig höher als die der Enthäutewalze ist, so daß ein minimaler, das Strecken unterstützender Zug entsteht.

Zum Zwecke der Steigerung der Produktivität der erfindungsgemäßen Vorrichtung können in einer Richtung senkrecht zur Förderrichtung des Filets zwei Schneidklingen nebeneinander angeordnet sein. So erhält man die Möglichkeit, quasi im doppelten Takt Filets eines Fisches parallel zueinander zu enthäuten, ohne auf irgendwelche Schaltzeiten Rücksicht nehmen zu müssen.

Die insgesamt mit der Erfindung erzielbaren Vorteile sind darin zu sehen, daß man in sämtlichen durch die natürlichen Strukturen kritischen Bearbeitungsbereichen eines Filets kontrolliert die Nutzschicht von der Abfallschicht trennen kann, so daß auftretende Verluste ebenso wie Nachtrimmerfordernisse - und damit zusätzlicher Personalaufwand - minimiert werden. Die für die Durchführung dieser Maßnahmen erforderlichen baulichen Aufwendungen halten sich ebenfalls im Rahmen und erlauben durch ihre übersichtlichen Anordnungsmöglichkeiten seitlich und oberhalb der eigentlichen Funktionsteile nach wie vor einen bequemen Zugang zu jenen, um während des Massenbetriebs gerade auch bei zwei parallel arbeitenden Vorrichtungslinien zügig arbeiten und auftretende Unterbrechungen beseitigen zu können.

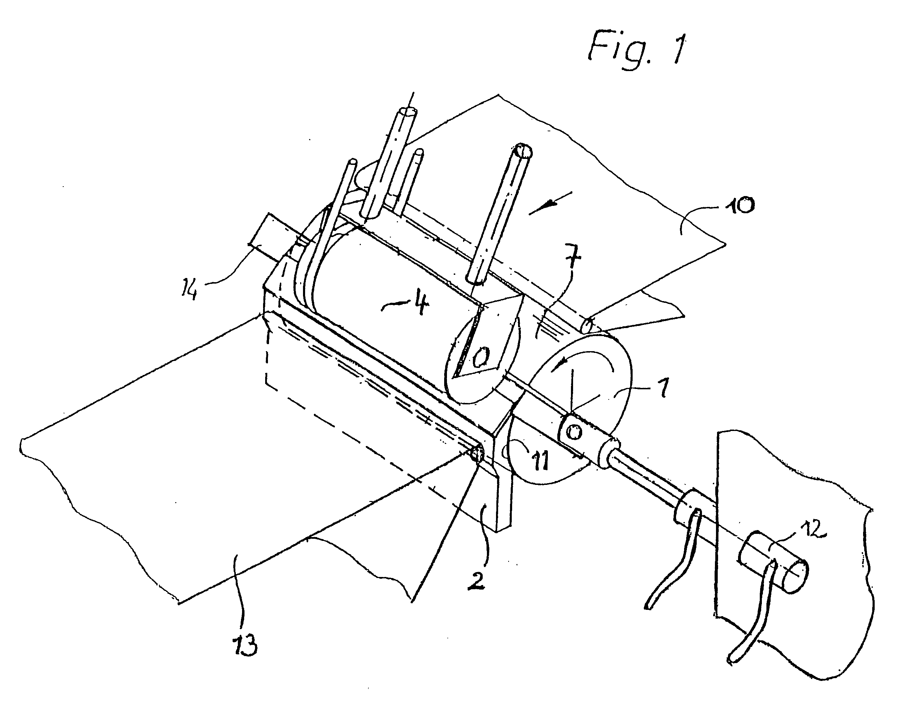

Weitere Vorteile und Ausführungsformen oder -möglichkeiten der Erfindung gehen aus der folgenden Beschreibung der in der schematischen Zeichnung dargestellten Ausführungsbeispiele hervor. Es zeigt
- Fig. 1: eine schaubildliche Teildarstellung einer hier einbahnigen Ausführungsform der vorliegenden Erfindung unter Weglassen von Teilen der Signalerzeugungseinrichtung,
- Fig. 2: eine Seitenansicht der Vorrichtung der Fig. 1, teilweise geschnitten, jedoch mit der Signalerzeugungseinrichtung,
- Fig.3: eine Draufsicht auf den Messerbereich und den Bewegungsmechanismus für das Anschnittmesser sowie
- Fig. 4: eine vergrößerte Teildarstellung im Querschnitt, jedoch nur Enthäutewalze, Messer und Andrückwalze zeigend.

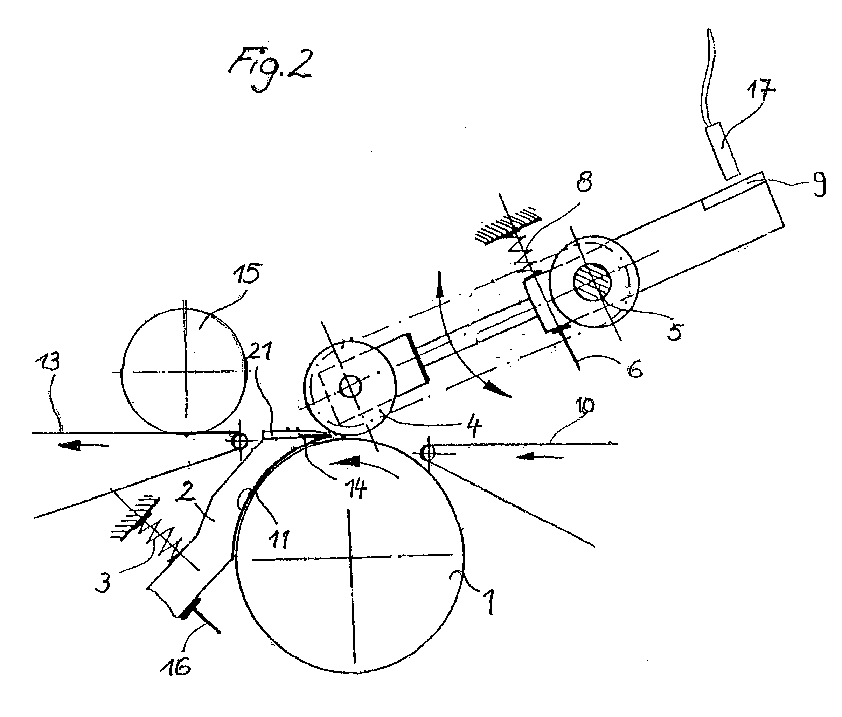

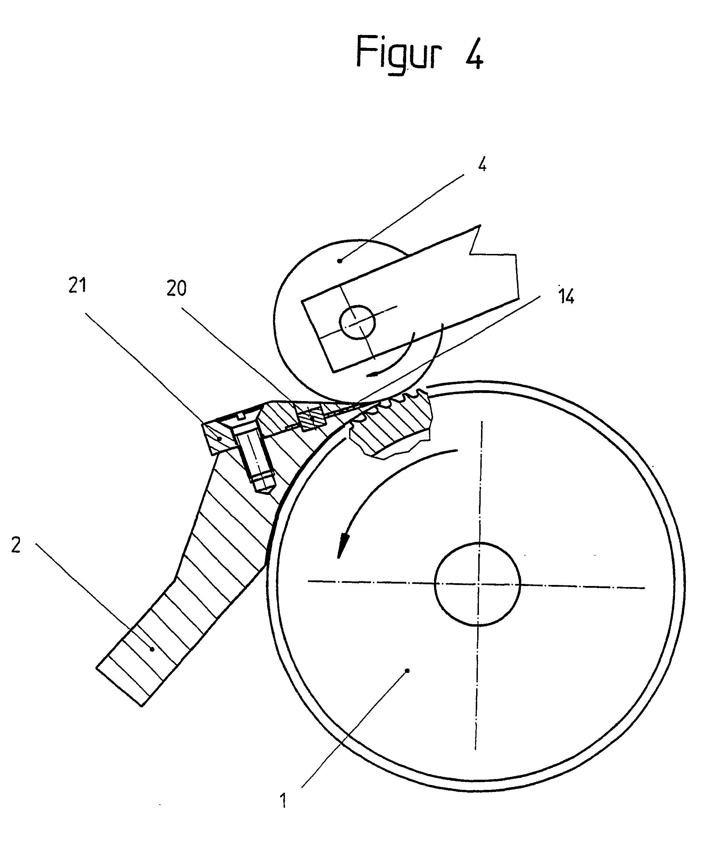

Wie aus der in den Figuren dargestellten vorteilhaften Ausführungsform der erfindungsgemäßen Vorrichtung erkennbar, weist eine Maschine zum Entfernen einer Oberflächenschicht von Fischfilets, insbesondere in Form der Haut, in einem aus Gründen der Übersichtlichkeit hier nicht näher gezeigten Maschinengestell eine umlaufend angetriebene Enthäutewalze 1, einen Andrückschuh 2, ein Zuführband 10 für zu enthäutende Filets sowie ein Abführband 13 für das enthäutete Filet auf. Bei dieser für sich bekannten Grundanordnung ist die Enthäutewalze 1 umlaufend angetrieben und an ihrer Mantelfläche griffig ausgebildet, wie man dies besonders gut in Fig. 4 erkennt, indem die Manteloberfläche der Enthäutewalze 1 mit einer Vielzahl sich im wesentlichen in Längsrichtung der Walze erstreckenden, gegebenenfalls sägezahnartig ausgebildeten Rillen versehen ist. Dieser griffig ausgebildeten Mantelfläche 7 der Enthäutewalze 1 liegt eine entsprechend ausgebildete Andrückfläche des Andrückschuhs 2 gegenüber, der, wie aus Fig. 2 erkennbar, gegen die Kraft einer Feder 3 gegenüber der Mantelfläche 7 verdrängbar gelagert ist. Der Andrückschuh 2 ist an seinem in Richtung auf das Zuführband 10 befindlichen Ende mit einer Trennkante 2a und oberhalb derselben mit einer (nicht näher bezeichneten) Tasche zur Aufnahme eines klingenartigen (Anschnitt)Messers 14 ausgebildet. Über diesem Bereich von Trennkante 2a und Klinge 14 ist eine Andrückrolle 4 angeordnet, die um eine zur Achse der Enthäutewalze 1 parallele und gestellfeste Achse 5 (siehe Fig. 2) schwenkbar gelagert ist. Sie ist durch einen einstellbaren Anschlag 6 in ihrer Bewegung in Richtung auf die Enthäutewalze 1 begrenzbar und gegen die Kraft einer Feder 8 oder beispielsweise auch eines Magneten, der in dem vorliegenden Ausführungsbeispiel nicht verwendet wird, von der Enthäutewalze 1 wegschwenkbar. Zur Kontrolle der Schwenkbewegung des die Andrückrolle 4 tragenden, nicht näher bezeichneten Schwenkarms um die Achse 5 ist ein gestellfester Näherungsschalter 17 vorgesehen, der mit einer entsprechenden Schaltfahne 9 am freien Ende dieses Schwenkarms zusammenwirkt und kontrolliert, wann die Andrückrolle ausgelenkt werden soll. Wann sie wieder in ihre Ausgangslage zurückkehrt, richtet sich in der Regel nach dem Durchlauf des Filets.

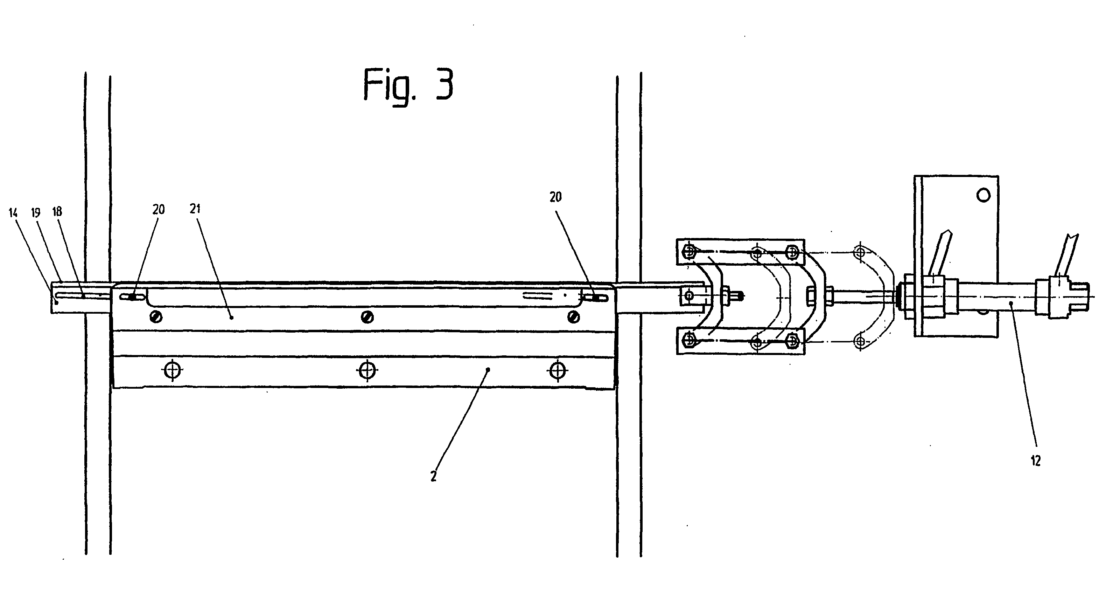

Der Aufbau der die Klinge 14 betätigenden Einrichtung ist insbesondere aus der Betrachtung der Fig. 3 und 4 erkennbar. So ist diese Klinge 14 an einem gestellfesten Zylinder 12 über eine hier nicht näher bezeichnete Führungs- und Bewegungseinrichtung befestigt und in der Aufnahmetasche des Andrückschuhs 2 durch schräg zu ihrer Schneide 19 angeordnete Führungsnuten 18 axial verschiebbar. Durch die Schräglage dieser Führungsnuten relativ zur Trennkante 2a des Andrückschuhs wird beim axialen Verschieben der Klinge 14 auf zu diesem Zweck vorgesehenen Stiften 20 die Klinge aus ihrer Ausgangsstellung hinter der Kante 2a des Andrückschuhs 2 vor dieselbe geschoben, wohingegen sie beim Zurückziehen wieder in die Aufnahmetasche, die zwischen einer Andrückschuhabdeckung 21 und dem Andrückschuh 2 selbst ausgebildet ist, zurücktaucht.

Entsprechend einer hier zeichnerisch nicht näher dargestellten Variante kann die Führung der Klinge 14 auch so vorgesehen sein, daß die Relativbewegung von Führungsnuten 18 und Stiften 20 einem - flachen - Bogen oder einem sonstwie gekrümmten Verlauf folgt derart, daß beim axialen Verschieben die Klinge auf einem Teil ihres Weges aus der Tasche heraus- und dann wieder in diese zurückbewegt wird. Während in diesem Fall normalerweise der höchste, d.h. gegen die Vorderkante des Andrückschuhs 2 am weitesten vorgeschoben liegende Führungspunkt des Bogens/der Krümmung etwa der Mitte des Kolbenhubes entspricht und die rückwärts gelegenen Endpunkte des Bogens die Einzugspositionen der Klinge am Beginn und Ende des Kolbenhubes definieren, ist natürlich auch eine demgegenüber invertierte Ausbildung einer solchen gekrümmten Führung denkbar.

Die Wirkungsweise dieser Vorrichtung ist wie folgt: Ein zu bearbeitendes Fischfilet wird mit seiner Hautfläche nach unten und Schwanz voraus auf das Zuführband 10 aufgelegt und durch dieses in Richtung auf die Trennvorrichtung 2, 14 zubewegt. Bei Verlassen des Zuführbandes 10 läuft zunächst das Schwanzende auf die in Richtung des Pfeiles umlaufende Mantelfläche 7 der Enthäutewalze 1 auf und gelangt unter die gleichsinnig umlaufende, dicht über der Trennkante 2a befindliche Andrückrolle 4, wodurch dieses Ende in den durch den Anschlag 6 einstellbaren Spalt zwischen der Mantelfläche der Enthäutewalze 1 und der dieser gegenüberliegenden Andrückfläche des Andrückschuhs 2 geführt wird. Kurz darauf beginnt die Kante 2a des Andrückschuhs 2 mit dem Ablösen der Nutzschicht des Filets von der Haut, wobei praktisch gleichzeitig die Andrückrolle 4 gegen die Kraft der Feder 8 angehoben und im Näherungsschalter 17 ein Signal erzeugt wird. Dieses Signal steuert die Operation des Betätigungszylinders 12, und zwar derart, daß dieser mindestens einen, aber gegebenenfalls, je nach den Verhältnissen im Filetzipfel, mehrere Hübe ausführt. Dauer und Anzahl der Hübe sind einstellbar. Infolge der Schräglage der Führungsnuten 18 führt die Anschnittklinge 14 einen effizienten ziehenden Schnitt aus, durch den die Sehnen in einem definierten Bereich von etwa 3 bis 5 cm Länge zwischen Fleisch und Haut sicher durchtrennt werden. Nach Beendigung dieses ziehenden Schnittes mittels der Klinge 14 bei Erreichen der eingestellten Hubzahl übernimmt dann die (feststehende) Schneide oder Trennkante 2a den weiteren Trennvorgang. Das Fleisch wird auf das unmittelbar hinter dem Andrückschuh angeordnete Abführband 13 geführt, während die Haut in dem Spalt 11 zwischen Mantelfläche 7 der Enthäutewalze 1 und Andrückfläche des Andrückschuhs 2 hindurchbewegt wird.

Wie aus Fig. 2 erkennbar, ist über dem Abführband 13 kurz hinter dem Andrückschuh eine weitere Andrückrolle 15 positioniert, die eine weiche, nachgiebige Oberfläche aufweist und dazu dient, während der gesamten Bearbeitung des Filets durch die Schneide 2a ein Verreißen desselben zu verhindern, indem sie in Verbindung mit dem Abführband 13 einen gleichmäßigen Druck auf das Filet ausübt, dasselbe also glättet, so daß in den seitlichen Bereichen des Filets, also auf der Bauch- und der Rückenseite angeordnete Sehnen und Grätenbereiche ebenfalls sicher durch- und abgetrennt werden können.

Es versteht sich von selbst, daß in einer größeren Fischverarbeitungsanlage mehrere der erfindungsgemäßen Vorrichtungen nebeneinander angeordnet sein können, so daß die Verarbeitung mehrbahnig erfolgen kann. Vor allem können aber auch in einer Vorrichtung zwei Klingen 14 nebeneinander von zwei auf entgegengesetzten Seiten vorgesehenen Zylindern 12 betätigbar angeordnet sein, und man kann bequem die beiden Filets eines Fisches gleichzeitig enthäuten.

## Patentansprüche

1. Verfahren zum Bearbeiten von Fischfilets, die mindestens eine Hautschicht, Abfallschicht, und eine Filetfleischschicht, Nutzschicht, sowie beide verbindende Sehnen- und Fettbereiche umfassen und durch ein dünneres Schwanzende sowie ein jenem entgegengesetztes stärkeres Kopfende definiert sind, durch Befreien der Filetfleischschicht von den Haut-, Fett- und Sehnen-Bestandteilen, wobei die Fischfilets auf der Hautseite liegend einem kurzzeitigen, hin und hergehend quer zur Förderrichtung verlaufenden ziehenden Schnitt im Schwanzbereich und anschließend einem diesen Schnitt fortführenden spaltenden Trennen einer feststehenden Trennkante unterworfen werden, die bei Auflaufen des Filets im Bereich des ziehenden Schnitts zwischen Haut- und Fleischschicht eindringt und beide Schichten voneinander trennt, während gleichzeitig Zug auf die Hautschicht ausgeübt wird, wobei auf die Fleischseite des Filets im Einlaufbereich desselben gegen die Trennkante Druck ausgeübt wird, **dadurch gekennzeichnet, daß** der ziehende Schnitt durch ein Signal gesteuert ausgelöst wird, in wenigen Hüben erfolgt sowie unmittelbar danach Signal-gesteuert unterbrochen wird, woraufhin die Trennkante zum Fortsetzen des endgültigen Trennvorgangs in den Bereich des ziehenden Schnitts zwischen Abfall- und Nutzschicht eintritt.

2. Verfahren nach Anspruch 1, **dadurch gekennzeichnet, daß** der kurzzeitige ziehende Schnitt erst nach Eintritt des dünneren Schwanzendes des Filets in einem den Zug auf die Hautschicht auslösenden Spalt und nach spaltendem Anschnitt durch die feststehende Trennkante unter Fortsetzung dieses Anschnitts erfolgt.

3. Verfahren nach Anspruch 1 oder 2, **dadurch gekennzeichnet, daß** der kurzzeitige ziehende Schnitt einen bis drei Hübe umfaßt.

4. Verfahren nach einem der Ansprüche 1 bis 3, **dadurch gekennzeichnet, daß** die Signalsteuerung des ziehenden Schnitts durch die Druckänderung im Einlaufbereich des Filets gegen die Trennkante ausgelöst wird.

5. Verfahren nach einem der Ansprüche 1 bis 4, **dadurch gekennzeichnet, daß** die Druckausübung auf das Filet im Trennkantenbereich nach dem ziehenden Schnitt beendet wird.

6. Verfahren nach einem der Ansprüche 1 bis 5, **dadurch gekennzeichnet, daß** das separierte Filet ablaufseitig hinter der Trennkante durch Zugausübung von unten und oben über seine im wesentlichen gesamte Quererstreckung gestreckt transportiert wird.

7. Vorrichtung zum Bearbeiten von mindestens eine Hautschicht (Abfallschicht) und eine Filetfleischschicht (Nutzschicht) sowie beide verbindende Sehnen- und Fettbereiche umfassenden Fischfilets, die ein dünneres Schwanzende und ein dickeres Kopfende aufweisen, durch Trennen dieser beiden Schichten voneinander, umfassend
- eine während der Bearbeitung im wesentlichen die Förderung der Filets übernehmende Enthäutewalze (1);
- ein feststehendes Trennwerkzeug in Form eines mit einer Andrückfläche dem Umfang der Enthäutewalze gegenüberliegenden Andrückschuhs (2), der mit einer Trennkante (2a) zum spaltenden Trennen von Nutz- und Abfallschicht ausgebildet sowie in seinem Abstand gegenüber der Enthäutewalze federnd veränderbar gelagert ist; und
- eine mit ihrer Schneide relativ zur Trennkante (2a) vor- und zurückbewegbare Schneidklinge (14), wobei
oberhalb der Trennkante (2a) eine Andrückwalze (4) angeordnet ist, die um eine vorrichtungsfeste Achse (5) schwenkbar gelagert ist; **dadurch gekennzeichnet, daß** die Andrückwalze (4) mit einem Näherungsschalter (17) wirkverbunden ist, der Signale für die Bewegung der Schneidklinge (14) erzeugt und über diese einen Bewegungsmechanismus (12) für dieselbe steuert.

8. Vorrichtung nach Anspruch 7, **dadurch gekennzeichnet, daß** die Schneidklinge (14) mit ihrer Schneide parallel zur Trennkante (2a) des Andrückschuhs (2) liegt und mittels schräg zu dieser Kante angeordneter Führungen zwischen ihren beiden Extrempositionen geführt bewegt wird.

9. Vorrichtung nach Anspruch 7 oder 8, **dadurch gekennzeichnet, daß** der Andrückschuh (2) über sowie hinter seiner Trennkante (2a) mit einer Messeraufnahmetasche versehen ist, die die Schneidklinge (14) relativ zur Trennkante (2a) in der Ruheposition abgedeckt aufnimmt und in der Arbeitsposition freigibt.

10. Vorrichtung nach einem der Ansprüche 7 bis 9, **dadurch gekennzeichnet, daß** die Andrückwalze (4) mit ihrem Auflagewirkbereich gegenüber dem Filet oberhalb der Trennkante (2a) zu dieser, in Richtung des ankommenden Filets gesehen, beabstandet angeordnet ist.

11. Vorrichtung nach einem der Ansprüche 7 bis 10 , **dadurch gekennzeichnet, daß** der Bewegungsmechanismus ein Druckmittelzylinder (12) ist, der über ein Gestänge an der Klinge (14) angreift, diese im wesentlichen parallel zur Enthäutewalzenachse (5) bewegt und mit dem Näherungsschalter (17) in funktioneller Verbindung steht.

12. Vorrichtung nach einem der Ansprüche 7 bis 11, **dadurch gekennzeichnet, daß** im Bereich hinter der Trennkante (2a) des Andrückschuhs (2) und über der Ablauffläche des Filets eine Filetausbreitwalze (15) angeordnet ist.

13. Vorrichtung nach Anspruch 12, **dadurch gekennzeichnet, daß** die Filetausbreitwalze (15) über einem Ablaufförderband (13) für das Filet mit diesem Band in Richtung und Geschwindigkeit gleichlaufend angeordnet ist, wobei diese Geschwindigkeit geringfügig höher als die der Enthäutewalze (1) ist.

14. Vorrichtung nach einem der Ansprüche 7 bis 13, **dadurch gekennzeichnet, daß** in einer Richtung senkrecht zur Förderrichtung der Filets zwei Schneidklingen (14) nebeneinander angeordnet sind.

## Claims

1. Method for processing fish fillets which include at least one skin layer, waste layer, and a fillet flesh layer, useful layer, as well as sinew and fat regions connecting the two, and are defined by a thinner tail end and a thicker head end opposite the former, by freeing the fillet flesh layer from the skin, fat and sinew components, wherein the fish fillets lying on the skin side are subjected to a brief pulling cut in the tail region, running to and fro transversely to the conveying direction, and then, continuing this cut, splitting separation by a stationary separating edge which, when the fillets approach, enters in the region of the pulling cut between skin and flesh layers and separates the two layers from each other, while at the same time a pull is exerted on the skin layer, wherein pressure is exerted on the flesh side of the fillet in the input region thereof against the separating edge, **characterized in that** the pulling cut is triggered under the control of a signal, effected in a few strokes and interrupted again immediately afterwards under the control of a signal, whereupon for continuation of the final separating operation the separating edge enters the region of the pulling cut between waste and useful layers.

2. Method according to claim 1, **characterized in that** the brief pulling cut is made only after entry of the thinner tail end of the fillet in a gap which triggers pulling on the skin layer and after splitting initial cutting by the stationary separating edge with continuation of this initial cutting.

3. Method according to claim 1 or 2, **characterized in that** the brief pulling cut includes one to three strokes.

4. Method according to any of claims 1 to 3, **characterized in that** the signal control of the pulling cut is triggered by the change of pressure in the input region of the fillet against the separating edge.

5. Method according to any of claims 1 to 4, **characterized in that** the exertion of pressure on the fillet in the region of the separating edge is ended after the pulling cut.

6. Method according to any of claims 1 to 5, **characterized in that** the separated fillet on the discharge side behind the separating edge is transported straight by exertion of a pull from above and below across essentially the whole of its transverse extent.

7. Apparatus for processing fish fillets which include at least one skin layer (waste layer) and a fillet flesh layer (useful layer) as well as sinew and fat regions connecting the two, and which have a thinner tail end and a thicker head end, by separating these two layers from each other, including
- a skinning roller (1) which substantially takes over the transport of the fillets during processing;
- a stationary separating tool in the form of a pressing shoe (2) which lies with a pressing surface opposite the circumference of the skinning roller and which is designed with a separating edge (2a) for splitting separation of useful and waste layers and is mounted so that its distance from the skinning roller is resiliently variable; and
- a cutting blade (14) which with its cutting edge is movable back and forth relative to the separating edge (2a), wherein
above the separating edge (2a) is arranged a pressing roller (4) which is mounted pivotably about a shaft (5) fixed to the apparatus; **characterized in that** and **in that** the pressing roller (4) is operatively connected to a proximity switch (17) which generates signals for movement of the cutting blade (14) and thereby controls a mechanism (12) for moving the blade.

8. Apparatus according to claim 7, **characterized in that** the cutting blade (14) lies with its cutting edge parallel to the separating edge (2a) of the pressing shoe (2) and is moved by means of guides arranged obliquely to this edge, guided between its two end positions.

9. Apparatus according to claim 7 or 8, **characterized in that** the pressing shoe (2) is provided above as well as behind its separating edge (2a) with a knife holding compartment which receives the cutting blade (14) in covered fashion relative to the separating edge (2a) in the rest position and releases it in the working position.

10. Apparatus according to any of claims 7 to 9, **characterized in that** the pressing roller (4) is arranged with its bearing working region relative to the fillet above the separating edge (2a) at a distance from the latter, seen in the direction of the arriving fillet.

11. Apparatus according to any of claims 7 to 10, **characterized in that** the mechanism is a fluid cylinder (12) which via a linkage engages the blade (14), moves the latter essentially parallel to the skinning roller shaft (5), and is functionally connected to the proximity switch (17).

12. Apparatus according to any of claims 7 to 11, **characterized in that** in the region behind the separating edge (2a) of the pressing shoe (2) and above the discharge surface of the fillet is arranged a fillet spreading roller (15).

13. Apparatus according to claim 12, **characterized in that** the fillet spreading roller (15) is arranged above a discharge conveyor belt (13) for the fillet, running in the same direction and at the same speed as the fillet, this speed being slightly higher than that of the skinning roller (1).

14. Apparatus according to any of claims 7 to 13, **characterized in that** two cutting blades (14) are arranged adjacent to each other in a direction perpendicularly to the conveying direction of the fillets.

## Revendications

1. Procédé de traitement de filets de poisson qui comportent au moins une couche de peau, ou couche de déchet, et une couche de chair de poisson, ou couche utile, ainsi que des régions grasses et fibreuses reliant les deux couches, et qui sont définis par une extrémité de queue et par une extrémité de tête opposée à l'extrémité de queue, ledit procédé de traitement consistant à libérer la couche de chair de poisson des constituants gras, fibreux et cutané, à soumettre les filets de poisson se trouvant du côté de la peau à une découpe avec traction dans la région de la queue suivant un mouvement alternatif transversalement à la direction de transport puis, à la suite de la cette découpe, à réaliser une séparation effectuée par une arête de séparation fixe qui pénètre entre la couche de peau et la couche de chair lors du passage du filet dans la région de la découpe avec traction et sépare les deux couches l'une de l'autre tout en exerçant une traction sur la couche de peau, et le côté chair du filet étant soumis à une pression contre l'arête de séparation dans la région d'entrée du filet, **caractérisé en ce que** la découpe est déclenchée en étant commandée par un signal, est effectuée en quelques courses puis est immédiatement interrompue par une commande par signal, après quoi l'arête de séparation entre dans la région de la découpe avec traction entre la couche de déchet et la couche utile afin de poursuivre le processus de séparation final.

2. Procédé selon la revendication 1, **caractérisé en ce que** la brève découpe avec traction est effectuée seulement après l'entrée de l'extrémité de queue plus mince du filet dans une fente déclenchant la traction exercée sur la couche de peau et après la découpe de séparation par l'arête de séparation fixe en poursuivant cette découpe.

3. Procédé selon la revendication 1 ou 2, **caractérisé en ce que** la brève découpe avec traction comporte une à trois courses.

4. Procédé selon l'une des revendications 1 à 3, **caractérisé en ce que** la commande par signal de la découpe avec traction est déclenchée par une variation de la pression exercée contre l'arête de séparation dans la région d'entrée du filet.

5. Procédé selon l'une des revendications 1 à 4, **caractérisé en ce que** la pression exercée sur le filet dans la région de l'arête de séparation est terminée après la découpe avec traction.

6. Procédé selon l'une des revendications 1 à 5, **caractérisé en ce que** le filet séparé est transporté allongé vers l'aval en arrière de l'arête de séparation en exerçant une traction depuis le bas et depuis le haut sensiblement sur toute son extension transversale.

7. Dispositif de traitement de filets de poisson qui comportent au moins une couche de peau (couche de déchet) et une couche de chair de poisson (couche utile) ainsi que des régions grasses et fibreuses reliant les deux couches et qui possèdent une extrémité de queue plus mince et une extrémité de tête plus épaisse, ledit traitement consistant à séparer ces deux couches l'une de l'autre, ledit dispositif comportant
- un rouleau d'écorchement (1) essentiellement chargé de déplacer les filets pendant le traitement,
- un outil de séparation fixe se présentant sous la forme d'un sabot de pressage (2) dont la surface de pressage est opposée à la périphérie du rouleau d'écorchement, qui est conformé avec une arête de séparation (2a) pour séparer la couche utile et la couche de déchet et qui est monté élastiquement de façon à pouvoir modifier sa distance par rapport au rouleau d'écorchement, et
- une lame de coupe (14) mobile de façon que son tranchant se déplace suivant un mouvement alternatif par rapport à l'arête de coupe (2a),
- un rouleau de pressage (4), monté de façon à pouvoir pivoter autour d'un axe (5) fixe par rapport du dispositif, étant placé au-dessus de l'arête de coupe (2a),
**caractérisé en ce que** le rouleau de pressage (4) est en liaison active avec un interrupteur de proximité (17) qui génère des signaux pour le déplacement de la lame de coupe (14) et qui commande au moyen de ces signaux un mécanisme (12) de déplacement de la lame de coupe.

8. Dispositif selon la revendication 7, **caractérisé en ce que** la lame de coupe (14) est placée de façon que son tranchant soit parallèle à l'arête de coupe (2a) du sabot de pressage (2) et est déplacée en étant guidée entre ses deux positions extrêmes par des guides placés obliquement à cette arête.

9. Dispositif selon la revendication 7 ou 8, **caractérisé en ce que** le sabot de pressage (2) est doté, au-dessus et au-dessous de son arête de séparation (2a), d'une poche de réception de couteau qui reçoit en position de repos la lame de coupe (14) de façon que son arête de séparation (2a) soit recouverte et la libère en position de travail.

10. Dispositif selon l'une des revendications 7 à 9, **caractérisé en ce que** la région active d'application du rouleau de pressage (4) est située par rapport ay filet au-dessus de l'arête de séparation (2a) à distance de celle-ci, lorsque l'on observe en direction de l'arrivée du filet.

11. Dispositif selon l'une des revendications 7 à 10, **caractérisé en ce que** le mécanisme de déplacement est un cylindre de pression intermédiaire (12) qui s'engage avec la lame (14) au moyen de tringles, qui déplace cette lame sensiblement parallèlement à l'axe (5) du rouleau d'écorchement et qui est en liaison fonctionnelle avec l'interrupteur de proximité (17).

12. Dispositif selon l'une des revendications 7 à 11, **caractérisé en ce qu'**un rouleau élargisseur de filet (15) est placé dans la région disposée en arrière de l'arête de séparation (2a) du sabot de pressage (2) et au-dessus de la surface de dégagement du filet.

13. Dispositif selon la revendication 12, **caractérisé en ce que** le rouleau élargisseur de filet (15) est situé au-dessus d'une bande transporteuse (13) de dégagement du filet et est synchrone en vitesse et direction avec cette bande, cette vitesse étant légèrement supérieure à celle du rouleau d'écorchement (1).

14. Dispositif selon l'une des revendications 7 à 13, **caractérisé en ce que** deux lames de coupe (14) sont placées l'une à côté de l'autre dans une direction perpendiculaire à la direction de transport des filets.
